# EUROPEAN PATENT SPECIFICATION

(11) **EP 4 216 502 B1**
(45) Date of publication and mention of the grant of the patent: **27.11.2024**
(21) Application number: 22153117.1
(22) Date of filing: 25.01.2022
(51) Int. Cl.: H04L 41/0806

(54) **METHOD FOR OPERATING A BROADBAND ACCESS NETWORK OF A TELECOMMUNICATIONS NETWORK, THE BROADBAND ACCESS NETWORK COMPRISING AT LEAST ONE CENTRAL OFFICE POINT OF DELIVERY AND THE CENTRAL OFFICE POINT OF DELIVERY, BROADBAND ACCESS NETWORK OR TELECOMMUNICATIONS NETWORK, SYSTEM, SOFTWARE-DEFINED INTERWORKING FUNCTION, PROGRAM AND COMPUTER-READABLE MEDIUM**
VERFAHREN ZUM BETRIEB EINES BREITBANDIGEN ZUGANGSNETZ EINES TELEKOMMUNIKATIONSNETZES, WOBEI DAS BREITBANDIGE ZUGANGSNETZ MINDESTENS EINEN VON DEM ZENTRALEN ZUGANGSPUNKT UND DEM ZENTRALEN ZUGANGSPUNKT, DEM BREITBANDIGEN ZUGANGSNETZ ODER TELEKOMMUNIKATIONSNETZ, DEM SYSTEM, DER SOFTWARE-DEFINIERTEN ZUSAMMENARBEITSFUNKTION, DEM PROGRAMM UND DEM COMPUTERLESBAREN MEDIUM UMFASST
PROCÉDÉ DE FONCTIONNEMENT D'UN RÉSEAU D'ACCÈS À LARGE BANDE D'UN RÉSEAU DE TÉLÉCOMMUNICATIONS, RÉSEAU D'ACCÈS À LARGE BANDE COMPRENANT AU MOINS UN POINT DE LIVRAISON DE BUREAU CENTRAL ET POINT DE LIVRAISON DE BUREAU CENTRAL, RÉSEAU D'ACCÈS À LARGE BANDE OU RÉSEAU DE TÉLÉCOMMUNICATIONS, SYSTÈME, FONCTION D'INTERFONCTIONNEMENT DÉFINIE PAR LOGICIEL, PROGRAMME ET SUPPORT LISIBLE PAR ORDINATEUR

(43) Date of publication of application: 26.07.2023
(73) Proprietor: Deutsche Telekom AG, 53113 Bonn (DE)
(72) Inventor: HAAG, Thomas, 63110 Rodgau (DE); SCHRAUB, Stefan, 61239 Ober-Mörlen (DE); KIND, Mario, 10119 Berlin (DE); HILBERS, Klaus, 71640 Ludwigsburg (DE); TERLINDE, Egbert, 64291 Darmstadt (DE)
(74) Representative: Schwöbel, Thilo K.

(56) References cited:
- EP-A2- 2 823 322
- EP-B1- 2 823 322
- US-A1- 2006 050 862
- US-B1- 11 153 155
- US-B2- 8 514 845

## Description

### BACKGROUND

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known or current telecommunications network or central office point of delivery design architectures, especially in view of software-defined wide area network applications or a software-defined wide area network application scenario, there are typically software-defined customer premises equipment devices or components, software-defined access elements and software-defined control entities or functionalities that are typically optimized for each vendor's components. Such software-defined wide area network solutions (especially of different vendors) are only compatible with each other to a limited extent or not at all across manufacturers. This often results in a real coupling among existing network elements cannot be realized. US patent publication US11153155 B1 teaches the implementation of a customer premises requirements provisioning mechanism within a provisioning manager, the customer premises requirements provisioning mechanism is referred to as Zero Touch provisioning mechanism. US patent publication US8514845 B2 discloses establishing a set of subscriber connections and receiving a signalling message including a subscriber identifier of a first subscriber of the set. In particular US8514845 B2 teaches intercepting a connection request during ongoing operation/operating. European patent application EP 2823322 A2 discloses a network access point having digital subscriber line access multiplexers (DSLAMs) that communicate crosstalk vectoring information to cancel crosstalk from symbols carried by subscriber lines. In particular EP 2823322 A2 teaches a host DSLAM in series to a client DSLAM.

### SUMMARY

An object of the present invention is to provide a technically simple, effective and cost effective solution for operating a broadband access network of a telecommunications network, the broadband access network comprising at least one central office point of delivery and the central office point of delivery comprising or being assigned or having access to an access orchestrator entity or functionality, and an element management system entity or functionality, wherein the telecommunications network furthermore also comprises a plurality of customer premises equipment entities serving or being related to one or a plurality of end users or subscribers of the telecommunications network, and wherein the telecommunications network additionally comprises or is assigned or related to an operations management system, the operations management system providing zero touch provisioning functionality regarding at least one specific customer premises equipment entity, wherein the incompatibility or incompatibilities of vendor-specific solutions with other solutions is/are minimized by integrating the vendor-specific solutions with the cloud central office infrastructure (central office point of delivery).

A further object of the present invention is to provide a corresponding broadband access network or corresponding telecommunications network, a corresponding system, a corresponding software-defined interworking function proxy or a corresponding central office point of delivery comprising a software-defined interworking function proxy.

The object of the present invention is achieved by a method for operating a broadband access network of a telecommunications network according to independent claim 1.

It is thereby advantageously possible to realize a disaggregated broadband network and associated architecture and to provide a solution such that the incompatibilities of vendor-specific solutions with other solutions are minimized by integrating the vendor-specific solutions with the cloud central office infrastructure (central office point of delivery): Especially with a two-part software-defined wide area network interworking function proxy ("IWF proxy") - in the context of the present invention also referred to as software-defined vendor abstraction function (SD-Vendor Abstraction Function, SD-VAF), the incompatibility of vendor-specific solutions with other solutions is minimized; especially, the software-defined vendor abstraction functions are logically combining an element management system-related software-defined vendor abstraction function (hereinafter also called EMS SD-VAF) and a core plane / management plane-related vendor abstraction function (hereinafter also called (CP/MP-VAF).

Hence, the vendor-specific solutions are integrated within the cloud of central office infrastructure (i.e. the interconnected central office points of delivery). The vendor-specific virtual network functions are hosted in the central office point of delivery infrastructure and the existing interfaces are able to be used by means of intercepting zero touch provisioning messages, i.e. a (first) zero touch provisioning message that is directed to or intended to be received by the operations management system (especially vendor-specific) is received by the central office point of delivery, and the central office point of delivery transmits the (first) zero touch provisioning message to the operations management system.

Through integration, the virtual network functions benefit from the capabilities (e.g., lifecycle processes, parameterization, networking) of the infrastructure (i.e. especially the infrastructure of (or cloud of) the central office points of delivery). Due to the capabilities of the central office point of delivery elements, this enables a significantly higher collaboration of the software-defined components with the provider network. The introduction of software-defined vendor abstraction function eliminates the separation into underlay and overlay services associated with conventional software-defined wide area network solutions. It also enables the continuation and improvement of already implemented network management and control processes for all (network) elements. This is particularly important for lifecycle operations at customer sites, for which the greatest possible automation is sought.

It is especially possible that the interaction of (or between) software-defined customer premises equipment entities (SD-CPEs), the software-defined access elements, and the software-defined control (SD-Control) is able to be optimized for each vendor's components; additionally, it is thereby possible to provide for the possibility of a tight integration and interoperability of network components provided by different vendors, e.g. in case that two customer sites, being equipped by different vendor's equipment, are to be commonly operated.

This is contrast to conventionally known and previous software-defined wide area network (SD-WAN) solutions (especially provided by different vendors) that are only compatible with each other to a limited extent or not at all across manufacturers or vendors; the services of such existing network elements are used in a way that the communication services are interconnected at lower protocol levels, and a real coupling with existing network elements does typically not take place.

Furthermore in conventionally known telecommunications networks, software-defined wide area network solutions typically consist of, on the one hand, a local component (SD-WAN Edge CPE, also called SD-CPE) e.g. located at the customer premises and, on the other hand, an access component (SD-WAN Access, also called SD-Access, or corresponding virtual network function) e.g. located at the central office. These pairs of components are parameterized by a central component, the SD-WAN control, for the provision of SD-WAN services (overlay communication), and configuration changes can also be initiated and modified, especially by means of zero touch provisioning messages. Central office point of delivery elements (or POD elements) are network elements with a spine-leaf architecture that are controlled by a cross-domain element management system (i.e. typically spanning the access domain, the core network domain, and the service domain).

In the conventionally known architecture concept according to the metro ethernet forum (MEF) might be the "Presto" interface; however, this interface starts above the domain controller (i.e. at a higher level or layer according to the OSI model). In contrast thereto, the present invention provides a solution such that interaction between software-defined customer premises equipment entities (SD-CPEs), the software-defined access elements, and the software-defined control (SD-Control) are able to interoperate, also across different vendor's equipment or components, thereby realizing an interaction below the domain controller, namely between the element management layer and the network element layer to directly achieve the principles of disaggregation and abstraction below the domain controller in the software-defined (SDx) context.

Thereby, the present invention especially allows for the possibility to realize specific use cases requiring a software-defined vendor abstraction function (SD VAF), such as:
-- the interconnection of different customer networks, which were (previously) realized by means of using different (i.e. heterogeneous) SD-WAN vendor solutions, with the need for adaptation and functional coupling by the provider;
-- the use of different systems (i.e. heterogeneous SD-WAN vendor solutions) in a customer's network domain.
-- the desire of customers to use CPEs (customer premises equipment entities) of different vendors (multi-vendor). The provider (of the telecommunications network or of the access) or the customer provides the coupling.

Hence, according to the present invention, it is advantageously possible to avoid - such as this is the case in connection of the deployment of conventionally known SD-WAN solutions - a devaluation of the capabilities of the telecommunications network providing the transport services (underlay) for the SD-WAN services (overlay). Such a devaluation would undermine both the flexibility inherent in the POD approach and previous mechanisms for controlling and managing the network.

The telecommunications network might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks). Hence, the presented invention can be applied in both fixed disaggregated networks (e.g. ONF (Open Network Foundation) SEBA (SDN-Enabled Broadband Access) 2.0) and mobile networks (e.g. via 5G, 6G), as well as in hybrid mixed forms.

By means of the operations management system transmitting the second zero touch provisioning message, the second zero touch provisioning message being directed to or intended to be received by the specific customer premises equipment, the second zero touch provisioning message being received by the central office point of delivery, and the central office point of delivery 110 transmitting the second zero touch provisioning message to the specific customer premises equipment, it is advantageously possible to also intercept second zero touch provisioning messages, i.e. zero touch provisioning messages being directed towards the specific customer premises equipment.

By means of the central office point of delivery, especially the access orchestrator entity or functionality and/or the element management system entity or functionality, comprising a zero touch provisioning detection entity or functionality intercepting the first zero touch provisioning message directed to or intended to be received by the operations management system and/or the second zero touch provisioning message received from the operations management system, it is advantageously possible to easily and effectively implement the inventive method.

According to embodiment of the present invention, it is advantageously possible and preferred that, in addition to the central office point of delivery, the telecommunications network comprises a further central office point of delivery, wherein the plurality of customer premises equipment entities are physically connected to the further central office point of delivery,
wherein especially the further central office point of delivery forwards the first zero touch provisioning message, being directed to or intended to be received by the operations management system, to the central office point of delivery.

By means of the further central office point of delivery (in addition to the central office point of delivery) especially providing the physical connection for the plurality of customer premises equipment entities, it is advantageously possible that the further central office point of delivery is used for connecting the plurality of customer premises equipment entities, and the central office point of delivery is used for intercepting the first and/or second zero touch provisioning message. it is advantageously possible to easily and effectively implement the inventive method.

According to another embodiment of the present invention, it is furthermore advantageously possible and preferred that the first zero touch provisioning message and/or the second zero touch provisioning message are involved in a lookup-procedure and/or a first-sign-of-life-procedure,
wherein especially the first zero touch provisioning message and/or the second zero touch provisioning message reflects a subscriber-related modification and/or a network-related modification of the specific customer premises equipment.

Thereby, it is advantageously possible to easily and effectively implement the inventive method.

According to still another embodiment of the present invention, it is advantageously possible and preferred that the first zero touch provisioning message and/or the second zero touch provisioning message are involved in a management procedure and/or or an inventory procedure, especially transporting templates for the specific customer premises equipment, and especially regarding quality-of-service and/or routing and/or credentials.

Thereby, it is advantageously possible to easily and effectively implement the inventive method.

According to another embodiment of the present invention, it is furthermore advantageously possible and preferred that the central office point of delivery, especially the zero touch provisioning detection entity or functionality, realizes a software-defined interworking function proxy, especially comprising a vendor-abstraction entity or functionality regarding the specific customer premises equipment and/or a vendor-abstraction entity or functionality regarding the operations management system.

By means of the central office point of delivery, especially the zero touch provisioning detection entity or functionality, realizing the software-defined interworking function proxy, especially comprising a vendor-abstraction entity or functionality regarding the specific customer premises equipment and/or a vendor-abstraction entity or functionality regarding the operations management system, it is advantageously possible to easily and effectively implement the inventive method.

According to another embodiment of the present invention, it is furthermore advantageously possible and preferred that the telecommunications network additionally comprises or is assigned or related to a further operations management system, the further operations management system providing zero touch provisioning functionality regarding at least one further specific customer premises equipment entity, wherein the method furthermore comprises the steps of:
-- a further first zero touch provisioning message that is directed to or intended to be received by the further operations management system is received by the central office point of delivery, and
-- the central office point of delivery transmits the further first zero touch provisioning message to the further operations management system, and

especially the further operations management system transmits a further second zero touch provisioning message, the further second zero touch provisioning message being directed to or intended to be received by the further specific customer premises equipment, wherein the further second zero touch provisioning message is received by the central office point of delivery, and wherein the central office point of delivery transmits the further second zero touch provisioning message to the further specific customer premises equipment,
wherein especially the specific customer premises equipment and the operations management system corresponds to a first vendor of customer premises equipment hardware, and the further specific customer premises equipment and the further operations management system corresponds to a second vendor of customer premises equipment hardware.

Furthermore, the present invention relates to a telecommunications network according to independent claim 7.

Furthermore, the present invention relates to a system for operating a broadband access network of a telecommunications according to independent claim 8.

According to another embodiment of the present invention, it is furthermore advantageously possible and preferred that the system according to claim 8 or the telecommunications network according to claim 7 comprises a software-defined interworking function proxy or the central office point of delivery comprising a software-defined interworking function proxy.

Still additionally, the present invention relates to a program according to independent claim 10.

Furthermore, the present invention relates to a computer-readable medium according to independent claim 11.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically shows in greater detail the central office point of delivery comprising a certain number of components, entities and/or network nodes, as well as further entities and/or network nodes being connected to the central office point of delivery.
Figure 3 schematically illustrates the infrastructure of the central office point of delivery or the plurality of central office points of delivery, the element management system as well as schematically the access domain, the core network domain as well as the service domain of the telecommunications network.

### DETAILED DESCRIPTION

The present invention will be described with reference to certain drawings but the invention is not limited thereto but only by the appended claims, whereby the independent claims define the invention and the dependent claims define particular preferred embodiments. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the following examples described herein are capable of operation in other sequences than described or illustrated herein.

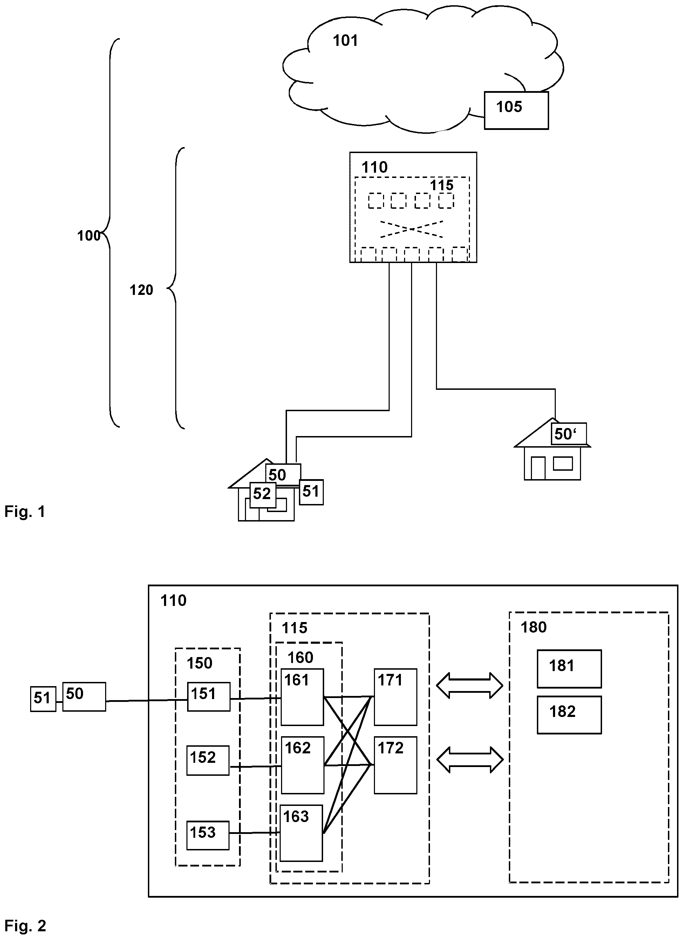

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices 51, 52 are connected to the telecommunications network 100 by means of a (broadband) access network 120. The telecommunications network 100 comprises, especially as part of the broadband access network 120, at least one logical or physical central office point of delivery 110 that is preferably realized within a (mini) data center and that is especially handling different access requirements, especially different access possibilities, of the client devices 51, 52 to network functionalities provided by the telecommunications network 100 or via the telecommunications network 100. In addition, the telecommunications network 100 typically also comprises - besides the broadband access network 120 - a core network 101. The client devices 51, 52 are typically connected to the logical or physical central office point of delivery 110 by means of a customer premises equipment device 50, 50', 50" or by means of a customer premises equipment entity or functionality that might be built into or realized by the client devices 51, 52. Preferably but not necessarily, the central office point of delivery 110 comprises a switching fabric 115 comprising a plurality of spine network nodes and typically also a plurality of leaf network nodes which are not explicitly represented in Figure 1. The telecommunications network 100 furthermore also comprises a business and/or operations support system 105.

Figure 2 schematically illustrates a central office point of delivery 110 as part of a broadband access network 120 of a telecommunications network 100. In the exemplary embodiment shown in Figure 2, the represented part of the telecommunications network 100 (or the central office point of delivery 110) comprises, especially as part of a control functionality or control plane 180, an access orchestrator entity or functionality 181 and at least one element management system entity or functionality 182. Furthermore, the central office point of delivery 110 comprises typically and preferably (but not necessarily) a plurality of access nodes 151, 152, 153 (or also called line termination nodes 151, 152, 153) as part of an access functionality 150. In the example represented in Figure 2, the broadband access network 120 comprises three access nodes, a first access node 151, a second access node 152, and a third access node 153. The access nodes 151, 152, 153 might be provided to support different access technologies to the customer premises equipment entities or functionalities 50, 50', 50"; the customer premises equipment entity or functionality 50, 50', 50" might also be called a home gateway or a cable modem or an integrated access device 50, 50', 50". Hence, a client device 51 (or a plurality of client devices which are not specifically represented in Figure 2) is (or are) connected to the telecommunications network 100 (especially to the first access node 151 or hybrid fiber coaxial network equipment) via the customer premises equipment entity or functionality 50, 50', 50". The functionality of the client device 51 and the functionality of the customer premises equipment entity or functionality 50, 50', 50" (or home gateway device 50, 50', 50" or cable modem 50, 50', 50") might be integrated in one device or "box". Nevertheless, these functionalities are represented in Figure 2 as separated functionalities. In Figure 2, only one cable modem device 50 (or customer premises equipment 50) (i.e. a specific customer premises equipment), and only one client device 51 are shown. However, also the second and/or third access nodes 152, 153 typically provide network access to end users or customers and the respective customer premises equipment devices or integrated access devices (not shown in Figure 2).

In the exemplary embodiment of the central office point of delivery 110 shown in Figure 2, the central office point of delivery 110 comprises a switching fabric 115 as a transport functionality or service 115 within the central office point of delivery 110. The switching fabric 115 (or transport functionality or service 115) comprises a plurality of spine network nodes 171, 172 and a plurality of leaf network nodes 161, 162, 163, the leaf network nodes 161, 162, 163 (i.e., according to the exemplary embodiment shown in Figure 2, a first leaf network node 161, a second leaf network node 162, and a third leaf network node 163) especially providing the edge functionality or service 160 within the central office point of delivery 110.

Hence, the access nodes 151, 152, 153 are serving or being related to one or a plurality of end users or subscribers (and the corresponding customer premises equipment devices or entities or functionalities and client devices) of the telecommunications network 100; for the sake of simplicity, Figure 2 only shows one customer premises equipment entity or functionality 50 and one client device 51, being connected to the first access node 151 of the central office point of delivery 110.

A method for operating a broadband access network 120 of a telecommunications network 100 is provided, wherein the broadband access network 120 comprising at least one central office point of delivery 110 and the central office point of delivery 110 comprising or being assigned to or having access to an access orchestrator entity or functionality 181, and an element management system entity or functionality 182. The telecommunications network 100 furthermore also comprises a plurality of customer premises equipment entities 50, 50', 50" serving or being related to one or a plurality of end users or subscribers of the telecommunications network. Additionally, the telecommunications network 100 comprises or is assigned to or related to an operations management system 105 (especially of a specific vendor or manufacturer), the operations management system 105 providing zero touch provisioning functionality regarding at least one specific customer premises equipment entity 50 (i.e. the specific customer premises equipment entity 50 being also provided by the specific vendor or manufacturer).

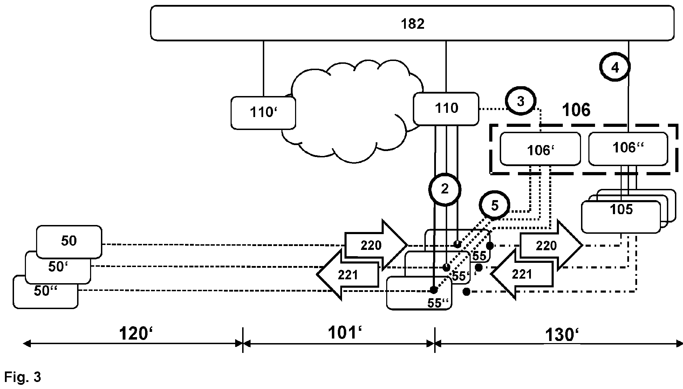

This is schematically shown in Figure 3 that illustrates the infrastructure of the central office point of delivery 110 or the plurality of central office points of delivery 110, 110', the element management system 182 as well as schematically the access domain 120', the core network domain 101' as well as the service domain 130' of the telecommunications network 100. In addition, the customer premises equipment entities or functionalities 50, 50', 50" are shown as part of the access domain 120'. As part of the core network domain 101' and/or as part of the service domain 130' (or at the interface or boundary of the core network and service domains), the telecommunications network 100 comprises (especially the central office point of delivery 110 comprises) virtual network functions 55, 55', 55" corresponding to the customer premises equipment entities or functionalities 50, 50', 50", wherein especially a specific or first customer premises equipment entity or functionality 50 corresponds to (or interacts with) a specific or first virtual network function 55, a second customer premises equipment entity or functionality 50' corresponds to (or interacts with) a second virtual network function 55' and a third customer premises equipment entity or functionality 50" corresponds to (or interacts with) a third virtual network function 55".

Between the customer premises equipment entity or functionality 50, 50', 50" and the (or its) corresponding virtual network function 55, 55', 55", especially control plane data as well as management plane data and user plane data are exchanged. Between the virtual network functions 55, 55', 55" on the one hand, and the central office point of delivery 110 on the other hand, user plane data are exchanged.

In order to apply or to conduct especially network management tasks with regard to the customer premises equipment entities or functionalities 50, 50', 50" - especially with respect to managing or handling of events or processes such as: show up (especially show-up of a specific customer premises equipment entity 50, newly connected to the telecommunications network 100), management and/or inventory (especially regarding the exchange or communication of templates for customer premises equipment entities and/or regarding quality-of-service parameters, routing parameters and/or credentials) - messages, specifically zero touch provisioning messages, are exchanged between the customer premises equipment entities or functionalities 50, 50', 50" on the one hand, and the operations management system 105 on the other hand. Such zero touch provisioning messages are schematically represented, in Figure 3, by means of reference signs 220 and 221 (and corresponding arrows), reference sign 220 being used for zero touch provisioning messages, in the context of the present invention also called first zero touch provisioning messages, travelling (or being transmitted) in the direction from the (specific) customer premises equipment entity or functionality 50 towards the operations management system 105, and reference sign 221 being used for zero touch provisioning messages, in the context of the present invention also called second zero touch provisioning messages, travelling (or being transmitted) in the direction from the operations management system 105 towards the (specific) customer premises equipment entity or functionality 50.

This exchange especially occurs in case that all these entities concerned are provided by one specific vendor or manufacturer (or conform to a specific communication protocol, defined by the respective vendor). This also means, that different kinds or different groups of specific customer premises equipment entities or functionalities 50, 50', 50" (each such kind being related to or provided by another vendor or manufacturer) might be present in the telecommunications network 100, and that regarding each such different kind or different group of specific customer premises equipment entities or functionalities 50, 50', 50", there might be a (or at least one) different operations management system 105 present, each such operations management system 105 being related or provided by another specific vendor or manufacturer (or conform to a corresponding specific communication protocol, defined by the respective vendor).

The method comprises the steps of:
-- in a first step, a first zero touch provisioning message 220 that is directed to or intended to be received by the operations management system 105 is received by the central office point of delivery 110,
-- in a second step, the central office point of delivery 110 transmits the first zero touch provisioning message 220 to the operations management system 105.

Hence, according to the present invention, it is advantageously possible to intercept the first zero touch provisioning message(s) 220, typically being transmitted by the specific customer premises equipment entity 50, and being directed to or intended to be received by the operations management system 105. The first zero touch provisioning message(s) 220 might be (but is/are not necessarily) modified by the central office point of delivery 110, e.g. an address field or address value exchanged or modified.

Alternatively (to the first and second steps) according to the present invention, or cumulatively (to the first and second steps), the operations management system 105 transmits a second zero touch provisioning message 221, the second zero touch provisioning message 221 being directed to or intended to be received by the specific customer premises equipment 50, and the second zero touch provisioning message 221 is received by the central office point of delivery 110, and the central office point of delivery 110 transmits the second zero touch provisioning message 221 to the specific customer premises equipment 50.

It is advantageously possible to alternatively or cumulatively intercept the second zero touch provisioning message(s) 221, typically being transmitted by the operations management system 105 and being directed to or intended to be received by the specific customer premises equipment entity 50. The second zero touch provisioning message(s) 221 might likewise be (but is/are not necessarily) modified by the central office point of delivery 110, e.g. an address field or address value exchanged or modified.

By means of the possibility to intercept the first zero touch provisioning message(s) 220 and/or the second zero touch provisioning message(s) 221, it is advantageously possible according to the present invention, for the telecommunications network 100 (or the (or one or a plurality of) central office point(s) of delivery 110) to manage or to handle events or processes of the customer premises equipment entities or functionalities 50, 50', 50" such as: show up, management and/or inventory processes in a vendor-abstracted manner.

The central office point of delivery 110, especially the access orchestrator entity or functionality 181 and/or the element management system entity or functionality 182, comprises a zero touch provisioning detection entity or functionality, wherein the zero touch provisioning detection entity or functionality intercepts the first zero touch provisioning message(s) 220 directed to or intended to be received by the operations management system 105 and/or the second zero touch provisioning message 221 received from the operations management system 105.

Typically, the telecommunications network 100 comprises not only one central office point of delivery (i.e. the central office point of delivery 110 that is also called the considered central office point of delivery) but a plurality of central office points of delivery, i.e. besides the (considered, or also called specific) central office point of delivery 110, there is at least one, but preferably a plurality of further central office points of delivery. In order to schematically reflect this in Figure 3, a further central office point of delivery 110' is schematically designated, in Figure 1, by reference sign 110'. According to the present invention, the zero touch provisioning detection entity or functionality intercepting the first and/or second zero touch provisioning messages 220, 221 does not need to be located in the same central office point of delivery 110 than the one to which the plurality of customer premises equipment entities 50, 50', 50" are physically connected, i.e. these customer premises equipment entities 50, 50', 50" might be physically connected (or logically assigned) to the further central office point of delivery 110', while still central office point of delivery 110 (or, rather, its zero touch provisioning detection entity or functionality) intercepts the first and/or second zero touch provisioning messages 220, 221; in this case, especially, the further central office point of delivery 110' (to which the customer premises equipment entities 50, 50', 50" are assumed to be physically connected (or logically assigned)) forwards the respective first zero touch provisioning message 220, being directed to or intended to be received by the operations management system 105, to the central office point of delivery 110 which does the intercepting operation, and, if application, the modification of the respective first zero touch provisioning message(s). Likewise (in the considered case of the customer premises equipment entities 50, 50', 50" being physically connected (or logically assigned) to the further central office point of delivery 110'), regarding a second zero touch provisioning message 221 (or a plurality of such second zero touch provisioning messages 221), after intercepting at the central office point of delivery 110, the respective message(s) is/are forwarded to the further central office point of delivery 110'.

The central office point of delivery 110, especially the zero touch provisioning detection entity or functionality, realizes a software-defined interworking function proxy 106, especially comprising a vendor-abstraction entity or functionality 106' regarding the specific customer premises equipment 50 and/or a vendor-abstraction entity or functionality 106" regarding the (specific or vendor-specific) operations management system 105.

The telecommunications network 100 additionally comprises or is assigned or related to a further (specific or vendor-specific) operations management system, the further operations management system providing zero touch provisioning functionality regarding at least one further specific customer premises equipment entity (or a further group of specific customer premises equipment entities), and wherein the method furthermore comprises the steps of:
-- a further first zero touch provisioning message that is directed to or intended to be received by the further operations management system is (upon transmission especially by the further specific customer premises equipment entity) received by the central office point of delivery 110, and
-- the central office point of delivery 110 transmits the further first zero touch provisioning message to the further operations management system 105.

Especially (alternatively or cumulatively), the further operations management system transmits a further second zero touch provisioning message, the further second zero touch provisioning message being directed to or intended to be received by the further specific customer premises equipment, wherein the further second zero touch provisioning message is received by the central office point of delivery 110, and wherein the central office point of delivery 110 transmits the further second zero touch provisioning message to the further specific customer premises equipment.

As already said, especially the specific customer premises equipment 50 and the operations management system 105 corresponds to a first vendor of customer premises equipment hardware, and the further specific customer premises equipment and the further operations management system corresponds to a second vendor of customer premises equipment hardware.

It is advantageously possible to integrate the vendor-specific solutions within the cloud of central office infrastructure (i.e. the interconnected central office points of delivery 110, 100'). The vendor-specific virtual network functions 55, 55', 55" are hosted in the central office point of delivery infrastructure (e.g. the central office point of delivery 110) and the existing interfaces (cf. reference sign 2 in Figure 3) are able to be used by means of intercepting zero touch provisioning messages 220, 221, i.e. a first zero touch provisioning message 220 that is (transmitted by the specific customer premises equipment entity 50, and) directed to or intended to be received by the (especially vendor-specific) operations management system 105 is received by the central office point of delivery 110 (or, its zero touch provisioning detection entity or functionality), and the central office point of delivery 110 transmits the first zero touch provisioning message 220 to the operations management system 105; likewise a second zero touch provisioning message 221 travelling or being transmitted in opposite direction is able to be intercepted.

Through integration, the virtual network functions 55, 55', 55" benefit from the capabilities (e.g., lifecycle processes, parameterization, networking) of the infrastructure of the central office points of delivery 110, 110'.

The introduction of software-defined vendor abstraction function (i.e. the software-defined interworking function proxy 106, especially comprising the vendor-abstraction entity or functionality 106' regarding the specific customer premises equipment 50 and/or a vendor-abstraction entity or functionality 106" regarding the (specific or vendor-specific) operations management system 105) eliminates the separation into underlay and overlay services associated with conventional software-defined wide area network solutions. It also enables the continuation and improvement of already implemented network management and control processes for all (network) elements. This is particularly important for lifecycle operations at customer sites, for which the greatest possible automation is sought.

The control plane / management plane vendor abstraction function (CP/MP-VAF), or software-defined interworking function proxy 106, is connected to the POD infrastructure (i.e. especially to the central office point of delivery 110), cf. reference sign 3 in Figure 3. The service knowledge of the central office point of delivery 110 or central office point of delivery infrastructure is available to the CP/MP-VAF / software-defined interworking function proxy 106. Existing interfaces with OSS/BSS levels at the central office point of delivery level do not need to be adapted to individual manufacturers for the use of manufacturer-specific virtual network functions 55, 55', 55"; adaptation of the CP/MP-VAF / software-defined interworking function proxy 106 to the manufacturer / vendor is sufficient.

By combining vendor-specific and network-specific information, the CP/MP-VAF / software-defined interworking function proxy 106 enables the virtual network function(s) 55, 55', 55" and the customer premises equipment entities 50, 50', 50" (especially virtual customer premises equipment entities, vCPE) to be set to fit exactly, especially by means of in-band management, cf. reference sign 5 in Figure 3.

It is especially provided for (with regard to the CP/MP-VAF / software-defined interworking function proxy 106) a linking of manufacturer and provider knowledge in a function to support the operational processes of a terminal equipment (vCPE), or (specific) customer premises equipment entity 50, especially regarding show-up and/or management and/or inventory.

The vendor-abstraction entity or functionality 106" (hereinafter also called element management system software-defined vendor abstraction function, EMS-SD-VAF) especially enables the use of the vendor-specific control and management component (or operations management system 105, OMS) of the corresponding virtual network function components 55, 55', 55". It is connected to the element management system (EMS) 182 (cf. reference sign 4 in Figure 3) and decouples the element management system 182 and the (specific or operator-specific) operations management system 105 from each other. Service control mechanisms running in the levels above the operations management system 105 do not have to be adapted to vendor-specific peculiarities in the upper elements (e.g., in the element management system EMS, 182). By connecting to the element management system 182, the EMS-SD-VAF (vendor-abstraction entity or functionality 106") has a knowledge of services and users so that it can enable the respective operations management system 105 to provide appropriate instructions and settings.

The EMS-SD-VAF (vendor-abstraction entity or functionality 106") is the linking or interweaving of service information with network-specific information, which is merged from vendor-specific virtual network functions 55, 55', 55" and customer premises equipment entities 50, 50', 50" (or vCPEs), as well as from network elements (central office point of delivery 110, 110') of the provider. This enables cross-vendor services, settings and procedures; examples include, e.g., forwarding, accounting, quality-of-service, service rules, uniform service templates or the like.

## Claims

1. Method for operating a broadband access network (120) of a telecommunications network (100), the broadband access network (120) comprising at least one central office point of delivery (110) and the central office point of delivery (110) comprising or having access to an access orchestrator entity or functionality (181), and an element management system entity or functionality (182),
wherein the central office point of delivery (110), the access orchestrator entity or functionality (181) or the element management system entity or functionality (182), comprises a zero touch provisioning detection entity or functionality,
wherein the telecommunications network (100) furthermore also comprises a plurality of customer premises equipment entities (50, 50', 50") serving a plurality of end users of the telecommunications network (100),
wherein the broadband access network (120) additionally comprises an operations management system (105), the operations management system (105) providing zero touch provisioning functionality regarding at least one specific customer premises equipment entity (50),
wherein the method comprises the following steps:
-- in a first step, a first zero touch provisioning message (220) that is sent from the at least one specific customer premises equipment entity (50) and is directed to be received by the operations management system (105) is received by the central office point of delivery (110),
-- in a second step, the central office point of delivery (110) transmits the first zero touch provisioning message (220) to the operations management system (105),
wherein the operations management system (105) transmits a second zero touch provisioning message (221), the second zero touch provisioning message (221) being directed to or intended to be received by the specific customer premises equipment (50), wherein the second zero touch provisioning message (221) is received by the central office point of delivery (110), and wherein the central office point of delivery (110) transmits the second zero touch provisioning message (221) to the specific customer premises equipment (50) and wherein the zero touch provisioning detection entity or functionality intercepts the first zero touch provisioning message (220) directed to be received by the operations management system (105) and the second zero touch provisioning message (221) transmitted from the operations management system (105) to the specific customer premises equipment (50).

2. Method according to claim 1,
wherein, in addition to the central office point of delivery (110), the telecommunications network (100) comprises a further central office point of delivery (110'), wherein the plurality of customer premises equipment entities (50, 50', 50") are physically connected to the further central office point of delivery (110'),
wherein the further central office point of delivery (110') forwards the first zero touch provisioning message (220), being directed to or intended to be received by the operations management system (105), to the central office point of delivery (110).

3. Method according to one of the preceding claims, wherein the first zero touch provisioning message (220) and/or the second zero touch provisioning message (221) are involved in a lookup-procedure and/or a first-sign-of-life-procedure, wherein the first zero touch provisioning message (220) and/or the second zero touch provisioning message (221) reflects a subscriber-related modification and/or a network-related modification of the specific customer premises equipment (50).

4. Method according to one of the preceding claims, wherein the first zero touch provisioning message (220) and/or the second zero touch provisioning message (221) are involved in a management procedure and/or or an inventory procedure, comprising transporting templates for the specific customer premises equipment (50), and regarding quality-of-service and/or routing and/or credentials

5. Method according to one of the preceding claims, wherein the zero touch provisioning detection entity or functionality, realizes a software-defined interworking function proxy (106), comprising a vendor-abstraction entity or functionality (106') regarding the specific customer premises equipment (50) and/or a vendor-abstraction entity or functionality (106") regarding the operations management system (105).

6. Method according to one of the preceding claims, wherein the telecommunications network (100) additionally comprises or is assigned or related to a further operations management system, the further operations management system providing zero touch provisioning functionality regarding at least one further specific customer premises equipment entity, wherein the method furthermore comprises the steps of:
-- a further first zero touch provisioning message that is directed to or intended to be received by the further operations management system is received by the central office point of delivery (110), and
-- the central office point of delivery (110) transmits the further first zero touch provisioning message to the further operations management system (105), and the further operations management system transmits a further second zero touch provisioning message, the further second zero touch provisioning message being directed to or intended to be received by the further specific customer premises equipment, wherein the further second zero touch provisioning message is received by the central office point of delivery (110), and wherein the central office point of delivery (110) transmits the further second zero touch provisioning message to the further specific customer premises equipment, wherein the specific customer premises equipment and the operations management system corresponds to a first vendor of customer premises equipment hardware, and the further specific customer premises equipment and the further operations management system corresponds to a second vendor of customer premises equipment hardware.

7. Telecommunications network (100) comprising a broadband access network (120), the broadband access network (120) comprising at least one central office point of delivery (110) and the central office point of delivery (110) comprising or having access to an access orchestrator entity or functionality (181), and an element management system entity or functionality (182), wherein the central office point of delivery (110), the access orchestrator entity or functionality (181) or the element management system entity or functionality (182), comprises a zero touch provisioning detection entity or functionality, wherein the telecommunications network (100) furthermore also comprises a plurality of customer premises equipment entities (50, 50', 50") serving a plurality of end users of the telecommunications network (100),
wherein the broadband access network (120) additionally comprises an operations management system (105), the operations management system (105) providing zero touch provisioning functionality regarding at least one specific customer premises equipment entity (50),
wherein the broadband access network (120) or the telecommunications network (100) comprising a broadband access network (120) is configured such that:
-- a first zero touch provisioning message (220) that is sent from the at least one specific customer premises equipment entity (50) and is directed to be received by the operations management system (105) is received by the central office point of delivery (110), and
-- the central office point of delivery (110) transmits the first zero touch provisioning message (220) to the operations management system (105), wherein the operations management system (105) transmits a second zero touch provisioning message (221), the second zero touch provisioning message (221) being directed to or intended to be received by the specific customer premises equipment (50), wherein the second zero touch provisioning message (221) is received by the central office point of delivery (110), and wherein the central office point of delivery (110) transmits the second zero touch provisioning message (221) to the specific customer premises equipment (50) and wherein the zero touch provisioning detection entity or functionality intercepts the first zero touch provisioning message (220) directed to be received by the operations management system (105) and the second zero touch provisioning message (221) transmitted from the operations management system (105) to the specific customer premises equipment (50).

8. System for operating a broadband access network (120) of a telecommunications network (100), the system comprising the telecommunications network (100) and the broadband access network (120), the broadband access network (120) comprising at least one central office point of delivery (110) and the central office point of delivery (110) comprising or having access to an access orchestrator entity or functionality (181), and an element management system entity or functionality (182), wherein the central office point of delivery (110), the access orchestrator entity or functionality (181) or the element management system entity or functionality (182), comprises a zero touch provisioning detection entity or functionality,
wherein the telecommunications network (100) furthermore also comprises a plurality of customer premises equipment entities (50, 50', 50") serving a plurality of end users of the telecommunications network (100),
wherein the broadband access network (120) additionally comprises an operations management system (105), the operations management system (105) providing zero touch provisioning functionality regarding at least one specific customer premises equipment entity (50),
wherein the system is configured such that:
-- a first zero touch provisioning message (220) that is sent from the at least one specific customer premises equipment entity (50) and is directed to be received by the operations management system (105) is received by the central office point of delivery (110), and
-- the central office point of delivery (110) transmits the first zero touch provisioning message (220) to the operations management system (105), wherein the operations management system (105) transmits a second zero touch provisioning message (221), the second zero touch provisioning message (221) being directed to or intended to be received by the specific customer premises equipment (50), wherein the second zero touch provisioning message (221) is received by the central office point of delivery (110), and wherein the central office point of delivery (110) transmits the second zero touch provisioning message (221) to the specific customer premises equipment (50) and wherein the zero touch provisioning detection entity or functionality intercepts the first zero touch provisioning message (220) directed to be received by the operations management system (105) and the second zero touch provisioning message (221) transmitted from the operations management system (105) to the specific customer premises equipment (50).

9. The system according to claim 8 or the telecommunications network (100) according to claim 7 comprising a software-defined interworking function proxy (106) or the central office point of delivery (110) comprising a software-defined interworking function proxy (106).

10. Program comprising a computer readable program code which, when executed on a computer and/or on a network node of a telecommunications network (100) and/or on a software-defined interworking function proxy (106) of a central office point of delivery (110), or in part on the network node of a telecommunications network (100) and/or in part on the software-defined interworking function proxy (106) of a central office point of delivery (110), causes the computer and/or the network node of the telecommunications network (100) and/or the software-defined interworking function proxy (106) of the central office point of delivery (110) to perform a method according one of claims 1 to 6.

11. Computer-readable medium comprising instructions which when executed a computer and/or on a network node of a telecommunications network (100) and/or on a software-defined interworking function proxy (106) of a central office point of delivery (110), or in part on the network node of a telecommunications network (100) and/or in part on the software-defined interworking function proxy (106) of a central office point of delivery (110), causes the computer and/or the network node of the telecommunications network (100) and/or the software-defined interworking function proxy (106) of the central office point of delivery (110) to perform a method according one of claims 1 to 6.

## Patentansprüche

1. Verfahren zum Betreiben eines Breitbandzugangsnetzes (120) eines Telekommunikationsnetzes (100), wobei das Breitbandzugangsnetz (120) mindestens einen Vermittlungsamt-Übergabepunkt (110) umfasst und der Vermittlungsamt-Übergabepunkt (110) eine Zugangsorchestratorentität oder -funktionalität (181) und eine Elementmanagementsystementität oder -funktionalität (182) umfasst oder darauf Zugriff hat,
wobei der Vermittlungsamt-Übergabepunkt (110), die Zugangsorchestratorentität oder -funktionalität (181) oder die Elementmanagementsystementität oder -funktionalität (182) eine Zero-Touch-Provisioning-Detektionsentität oder -Funktionalität umfasst,
wobei das Telekommunikationsnetz (100) darüber hinaus auch mehrere Teilnehmerendgerätentitäten (50, 50', 50") umfasst, die mehrere Endnutzer des Telekommunikationsnetzes (100) bedienen,
wobei das Breitbandzugangsnetz (120) zusätzlich ein Betriebsmanagementsystem (105) umfasst, wobei das Betriebsmanagementsystem (105) eine Zero-Touch-Provisioning-Funktionalität in Bezug auf mindestens eine spezifische Teilnehmerendgerätentität (50) bereitstellt, wobei das Verfahren die folgenden Schritte umfasst:
- in einem ersten Schritt wird eine erste Zero-Touch-Provisioning-Nachricht (220), die von dem mindestens einen spezifischen Teilnehmerendgerätentität (50) gesendet wird und angewiesen wird, durch das Betriebsmanagementsystem (105) empfangen zu werden, durch den Vermittlungsamt-Übergabepunkt (110) empfangen,
- in einem zweiten Schritt sendet der Vermittlungsamt-Übergabepunkt (110) die erste Zero-Touch-Provisioning-Nachricht (220) an das Betriebsmanagementsystem (105),
wobei das Betriebsmanagementsystem (105) eine zweite Zero-Touch-Provisioning-Nachricht (221) sendet, wobei die zweite Zero-Touch-Provisioning-Nachricht (221) angewiesen wird, durch das spezifische Teilnehmerendgerät (50) empfangen zu werden, oder dafür vorgesehen ist, durch dieses empfangen zu werden, wobei die zweite Zero-Touch-Provisioning-Nachricht (221) durch den Vermittlungsamt-Übergabepunkt (110) empfangen wird, und wobei der Vermittlungsamt-Übergabepunkt (110) die zweite Zero-Touch-Provisioning-Nachricht (221) an das spezifische Teilnehmerendgerät (50) sendet und wobei die Zero-Touch-Provisioning-Detektionsentität oder -Funktionalität die erste Zero-Touch-Provisioning-Nachricht (220), die angewiesen wird, durch das Betriebsmanagementsystem (105) empfangen zu werden, und die zweite Zero-Touch-Provisioning-Nachricht (221), die von dem Betriebsmanagementsystem (105) an das spezifische Teilnehmerendgerät (50) gesendet wird, abfängt.

2. Verfahren nach Anspruch 1, wobei das Telekommunikationsnetz (100) zusätzlich zu dem Vermittlungsamt-Übergabepunkt (110) einen weiteren Vermittlungsamt-Übergabepunkt (110') umfasst, wobei die mehreren Teilnehmerendgerätentitäten (50, 50', 50") physisch mit dem weiteren Vermittlungsamt-Übergabepunkt (110') verbunden werden,
wobei der weitere Vermittlungsamt-Übergabepunkt (110') die erste Zero-Touch-Provisioning-Nachricht (220), die angewiesen wird, durch das Betriebsmanagementsystem (105) empfangen zu werden, oder dafür vorgesehen ist, durch dieses empfangen zu werden, an den Vermittlungsamt-Übergabepunkt (110) weiterleitet.

3. Verfahren nach einem der vorangehenden Ansprüche, wobei die erste Zero-Touch-Provisioning-Nachricht (220) und/oder die zweite Zero-Touch-Provisioning-Nachricht (221) an einem Nachschlage-Procedere und/oder einem First-Sign-of-Life-Procedere beteiligt sind, wobei die erste Zero-Touch-Provisioning-Nachricht (220) und/oder die zweite Zero-Touch-Provisioning-Nachricht (221) eine teilnehmerbezogene Modifikation und/oder eine netzbezogene Modifikation des spezifischen Teilnehmerendgerätes (50) widerspiegeln.

4. Verfahren nach einem der vorangehenden Ansprüche, wobei die erste Zero-Touch-Provisioning-Nachricht (220) und/oder die zweite Zero-Touch-Provisioning-Nachricht (221) an einem Management-Procedere und/oder einem Inventur-Procedere beteiligt sind, die Transportschablonen für das spezifische Teilnehmerendgerät (50) umfassen und Dienstgüte und/oder Routung und/oder Berechtigungsnachweise betreffen.

5. Verfahren nach einem der vorangehenden Ansprüche, wobei die Zero-Touch-Provisioning-Detektionsentität
oder -Funktionalität einen Software-definierten Interaktionsfunktionsproxy (106) realisiert, der eine Anbieterabstraktionsentität oder -funktionalität (106') in Bezug auf das spezifische Teilnehmerendgerät (50) und/oder eine Anbieterabstraktionsentität oder -funktionalität (106") in Bezug auf das Betriebsmanagementsystem (105) umfasst.

6. Verfahren nach einem der vorangehenden Ansprüche, wobei das Telekommunikationsnetz (100) zusätzlich ein weiteres Betriebsmanagementsystem umfasst oder diesem zugewiesen wird oder mit diesem in Beziehung steht, wobei das weitere Betriebsmanagementsystem eine Zero-Touch-Provisioning-Funktionalität in Bezug auf mindestens eine weitere spezifische Teilnehmerendgerätentität bereitstellt, wobei das Verfahren darüber hinaus die folgenden Schritte umfasst:
- eine weitere erste Zero-Touch-Provisioning-Nachricht, die angewiesen wird, durch das weitere Betriebsmanagementsystem empfangen zu werden, oder dafür vorgesehen ist, durch dieses empfangen zu werden, wird durch den Vermittlungsamt-Übergabepunkt (110) empfangen, und
- der Vermittlungsamt-Übergabepunkt (110) sendet die weitere erste Zero-Touch-Provisioning-Nachricht an das weitere Betriebsmanagementsystem (105), und das weitere Betriebsmanagementsystem sendet eine weitere zweite Zero-Touch-Provisioning-Nachricht, wobei die weitere zweite Zero-Touch-Provisioning-Nachricht angewiesen wird, durch das weitere spezifische Teilnehmerendgerät empfangen zu werden oder dafür vorgesehen ist, durch dieses empfangen zu werden, wobei die weitere zweite Zero-Touch-Provisioning-Nachricht durch den Vermittlungsamt-Übergabepunkt (110) empfangen wird, und wobei der Vermittlungsamt-Übergabepunkt (110) die weitere zweite Zero-Touch-Provisioning-Nachricht an das weitere spezifische Teilnehmerendgerät sendet,
wobei das spezifische Teilnehmerendgerät und das Betriebsmanagementsystem einem ersten Anbieter von Teilnehmerendgerät-Hardware entsprechen und das weitere spezifische Teilnehmerendgerät und das weitere Betriebsmanagementsystem einem zweiten Anbieter von Teilnehmerendgerät-Hardware entsprechen.

7. Telekommunikationsnetz (100), umfassend ein Breitbandzugangsnetz (120), wobei das Breitbandzugangsnetz (120) mindestens einen Vermittlungsamt-Übergabepunkt (110) umfasst und der Vermittlungsamt-Übergabepunkt (110) eine Zugangsorchestratorentität oder -funktionalität (181) und eine Elementmanagementsystementität oder -funktionalität (182) umfasst oder darauf Zugriff hat,
wobei der Vermittlungsamt-Übergabepunkt (110), die Zugangsorchestratorentität oder -funktionalität (181) oder die Elementmanagementsystementität oder -funktionalität (182) eine Zero-Touch-Provisioning-Detektionsentität oder -Funktionalität umfasst,
wobei das Telekommunikationsnetz (100) darüber hinaus auch mehrere Teilnehmerendgerätentitäten (50, 50', 50") umfasst, die mehrere Endnutzer des Telekommunikationsnetzes (100) bedienen,
wobei das Breitbandzugangsnetz (120) zusätzlich ein Betriebsmanagementsystem (105) umfasst, wobei das Betriebsmanagementsystem (105) eine Zero-Touch-Provisioning-Funktionalität in Bezug auf mindestens eine spezifische Teilnehmerendgerätentität (50) bereitstellt, wobei das Breitbandzugangsnetz (120) oder das Telekommunikationsnetz (100), das ein Breitbandzugangsnetz (120) umfasst, so eingerichtet ist, dass:
- eine erste Zero-Touch-Provisioning-Nachricht (220), die von dem mindestens einen spezifischen Teilnehmerendgerätentität (50) gesendet wird und angewiesen wird, durch das Betriebsmanagementsystem (105) empfangen zu werden, durch den Vermittlungsamt-Übergabepunkt (110) empfangen wird, und
- der Vermittlungsamt-Übergabepunkt (110) die erste Zero-Touch-Provisioning-Nachricht (220) an das Betriebsmanagementsystem (105) sendet, wobei das Betriebsmanagementsystem (105) eine zweite Zero-Touch-Provisioning-Nachricht (221) sendet, wobei die zweite Zero-Touch-Provisioning-Nachricht (221) angewiesen wird, durch das spezifische Teilnehmerendgerät (50) empfangen zu werden, oder dafür vorgesehen ist, durch dieses empfangen zu werden, wobei die zweite Zero-Touch-Provisioning-Nachricht (221) durch den Vermittlungsamt-Übergabepunkt (110) empfangen wird, und wobei der Vermittlungsamt-Übergabepunkt (110) die zweite Zero-Touch-Provisioning-Nachricht (221) an das spezifische Teilnehmerendgerät (50) sendet und wobei die Zero-Touch-Provisioning-Detektionsentität
oder -Funktionalität die erste Zero-Touch-Provisioning-Nachricht (220), die angewiesen wird, durch das Betriebsmanagementsystem (105) empfangen zu werden, und die zweite Zero-Touch-Provisioning-Nachricht (221), die von dem Betriebsmanagementsystem (105) an das spezifische Teilnehmerendgerät (50) gesendet wird, abfängt.

8. System zum Betreiben eines Breitbandzugangsnetzes (120) eines Telekommunikationsnetzes (100), wobei das System das Telekommunikationsnetz (100) und das Breitbandzugangsnetz (120) umfasst, wobei das Breitbandzugangsnetz (120) mindestens einen Vermittlungsamt-Übergabepunkt (110) umfasst und der Vermittlungsamt-Übergabepunkt (110) eine Zugangsorchestratorentität oder -funktionalität (181) und eine Elementmanagementsystementität oder -funktionalität (182) umfasst oder darauf Zugriff hat,
wobei der Vermittlungsamt-Übergabepunkt (110), die Zugangsorchestratorentität oder -funktionalität (181) oder die Elementmanagementsystementität oder -funktionalität (182) eine Zero-Touch-Provisioning-Detektionsentität oder -Funktionalität umfasst,
wobei das Telekommunikationsnetz (100) darüber hinaus auch mehrere Teilnehmerendgerätentitäten (50, 50', 50") umfasst, die mehrere Endnutzer des Telekommunikationsnetzes (100) bedienen,
wobei das Breitbandzugangsnetz (120) zusätzlich ein Betriebsmanagementsystem (105) umfasst, wobei das Betriebsmanagementsystem (105) eine Zero-Touch-Provisioning-Funktionalität in Bezug auf mindestens eine spezifische Teilnehmerendgerätentität (50) bereitstellt, wobei das System so eingerichtet ist, dass:
- eine erste Zero-Touch-Provisioning-Nachricht (220), die von dem mindestens einen spezifischen Teilnehmerendgerätentität (50) gesendet wird und angewiesen wird, durch das Betriebsmanagementsystem (105) empfangen zu werden, durch den Vermittlungsamt-Übergabepunkt (110) empfangen wird, und
- der Vermittlungsamt-Übergabepunkt (110) die erste Zero-Touch-Provisioning-Nachricht (220) an das Betriebsmanagementsystem (105) sendet, wobei das Betriebsmanagementsystem (105) eine zweite Zero-Touch-Provisioning-Nachricht (221) sendet, wobei die zweite Zero-Touch-Provisioning-Nachricht (221) angewiesen wird, durch das spezifische Teilnehmerendgerät (50) empfangen zu werden, oder dafür vorgesehen ist, durch dieses empfangen zu werden, wobei die zweite Zero-Touch-Provisioning-Nachricht (221) durch den Vermittlungsamt-Übergabepunkt (110) empfangen wird, und wobei der Vermittlungsamt-Übergabepunkt (110) die zweite Zero-Touch-Provisioning-Nachricht (221) an das spezifische Teilnehmerendgerät (50) sendet und wobei die Zero-Touch-Provisioning-Detektionsentität
oder -Funktionalität die erste Zero-Touch-Provisioning-Nachricht (220), die angewiesen wird, durch das Betriebsmanagementsystem (105) empfangen zu werden, und die zweite Zero-Touch-Provisioning-Nachricht (221), die von dem Betriebsmanagementsystem (105) an das spezifische Teilnehmerendgerät (50) gesendet wird, abfängt.

9. System nach Anspruch 8 oder Telekommunikationsnetz (100) nach Anspruch 7, umfassend einen Software-definierten Interaktionsfunktionsproxy (106), oder Vermittlungsamt-Übergabepunkt (110), der einen Software-definierten Interaktionsfunktionsproxy (106) umfasst.

10. Programm, umfassend einen computerlesbaren Programmcode, der, wenn er auf einem Computer und/oder in einem Netzknoten eines Telekommunikationsnetzes (100) und/oder in einem Software-definierten Interaktionsfunktionsproxy (106) eines Vermittlungsamt-Übergabepunktes (110) oder teilweise in dem Netzknoten eines Telekommunikationsnetzes (100) und/oder teilweise in dem Software-definierten Interaktionsfunktionsproxy (106) eines Vermittlungsamt-Übergabepunkts (110) ausgeführt wird, den Computer und/oder den Netzknoten des Telekommunikationsnetzes (100) und/oder den Software-definierten Interaktionsfunktionsproxy (106) des Vermittlungsamt-Übergabepunkts (110) veranlasst, ein Verfahren nach einem der Ansprüche 1 bis 6 durchzuführen.

11. Computerlesbares Medium, umfassend Instruktionen, die, wenn sie auf einem Computer und/oder in einem Netzknoten eines Telekommunikationsnetzes (100) und/oder in einem Software-definierten Interaktionsfunktionsproxy (106) eines Vermittlungsamt-Übergabepunktes (110) oder teilweise in dem Netzknoten eines Telekommunikationsnetzes (100) und/oder teilweise in dem Software-definierten Interaktionsfunktionsproxy (106) eines Vermittlungsamt-Übergabepunktes (110) ausgeführt werden, den Computer und/oder den Netzknoten des Telekommunikationsnetzes (100) und/oder den Software-definierten Interaktionsfunktionsproxy (106) des Vermittlungsamt-Übergabepunktes (110) veranlasst, ein Verfahren nach einem der Ansprüche 1 bis 6 durchzuführen.

## Revendications

1. Procédé d'exploitation d'un réseau d'accès à large bande (120) d'un réseau de télécommunications (100), le réseau d'accès à large bande (120) comprenant au moins un point central de livraison (110) et le point central de livraison (110) comprenant ou ayant accès à une entité ou fonctionnalité d'orchestrateur d'accès (181), et une entité ou fonctionnalité de système de gestion d'éléments (182), dans lequel le point central de livraison (110), l'entité ou fonctionnalité d'orchestrateur d'accès (181) ou l'entité ou fonctionnalité de système de gestion d'éléments (182) comprend une entité ou fonctionnalité de détection de provisionnement sans contact,
dans lequel le réseau de télécommunications (100) comprend en outre une pluralité d'entités d'équipement des locaux du client (50, 50', 50'') desservant une pluralité d'utilisateurs finaux du réseau de télécommunications (100),
dans lequel le réseau d'accès à large bande (120) comprend en outre un système de gestion des opérations (105), le système de gestion des opérations (105) fournissant une fonctionnalité de provisionnement sans contact concernant au moins une entité d'équipement des locaux du client spécifique (50),
dans lequel le procédé comprend les étapes suivantes :
- dans une première étape, un premier message de provisionnement sans contact (220) qui est envoyé par ladite au moins une entité d'équipement des locaux du client spécifique (50) et destiné à être reçu par le système de gestion des opérations (105) est reçu par le point central de livraison (110),
- dans une deuxième étape, le point central de livraison (110) transmet le premier message de provisionnement sans contact (220) au système de gestion des opérations (105),
dans lequel le système de gestion des opérations (105) transmet un second message de provisionnement sans contact (221), le second message de provisionnement sans contact (221) étant adressé ou destiné à être reçu par l'équipement des locaux du client spécifique (50), dans lequel le second message de provisionnement sans contact (221) est reçu par le point central de livraison (110), et dans lequel le point central de livraison (110) transmet le second message de provisionnement sans contact (221) à l'équipement des locaux du client spécifique (50) et dans lequel l'entité ou la fonctionnalité de détection de provisionnement sans contact intercepte le premier message de provisionnement sans contact (220) destiné à être reçu par le système de gestion des opérations (105) et le second message de provisionnement sans contact (221) transmis par le système de gestion des opérations (105) à l'équipement des locaux du client spécifique (50).

2. Procédé selon la revendication 1,
dans lequel, en plus du point central de livraison (110), le réseau de télécommunications (100) comprend un autre point central de livraison (110'), dans lequel la pluralité d'entités d'équipement des locaux du client (50, 50', 50") sont physiquement connectées à l'autre point central de livraison (110'),
dans lequel l'autre point central de livraison (110') transmet au point central de livraison (110) le premier message de provisionnement sans contact (220) adressé ou destiné à être reçu par le système de gestion des opérations (105) .

3. Procédé selon l'une des revendications précédentes, dans lequel le premier message de provisionnement sans contact (220) et/ou le second message de provisionnement sans contact (221) interviennent dans une procédure de recherche et/ou une procédure de premier signe de vie, dans lequel le premier message de provisionnement sans contact (220) et/ou le second message de provisionnement sans contact (221) reflètent une modification liée à l'abonné et/ou une modification liée au réseau de l'équipement des locaux du client spécifique (50).

4. Procédé selon l'une des revendications précédentes, dans lequel le premier message de provisionnement sans contact (220) et/ou le second message de provisionnement sans contact (221) interviennent dans une procédure de gestion et/ou une procédure d'inventaire, comprenant de transporter des modèles pour l'équipement des locaux du client spécifique (50) et concernant la qualité de service et/ou le routage et/ou des informations d'identification.

5. Procédé selon l'une des revendications précédentes, dans lequel l'entité ou la fonctionnalité de détection de provisionnement sans contact réalise un proxy de fonction d'interfonctionnement défini par logiciel (106) comprenant une entité ou fonctionnalité d'abstraction du fournisseur (106') concernant l'équipement des locaux du client spécifique (50) et/ou une entité ou fonctionnalité d'abstraction du fournisseur (106") concernant le système de gestion des opérations (105).

6. Procédé selon l'une des revendications précédentes, dans lequel le réseau de télécommunications (100) comprend en outre ou est affecté ou lié à un autre système de gestion des opérations, l'autre système de gestion des opérations fournissant une fonctionnalité de provisionnement sans contact concernant au moins une autre entité d'équipement des locaux du client spécifique, dans lequel le procédé comprend en outre les étapes suivantes :
- un autre premier message de provisionnement sans contact qui est adressé ou destiné à être reçu par l'autre système de gestion des opérations est reçu par le point central de livraison (110), et
- le point central de livraison (110) transmet l'autre premier message de provisionnement sans contact à l'autre système de gestion des opérations (105), et l'autre système de gestion des opérations transmet un autre second message de provisionnement sans contact, l'autre second message de provisionnement sans contact étant adressé ou destiné à être reçu par l'autre équipement des locaux du client spécifique, dans lequel l'autre second message de provisionnement sans contact est reçu par le point central de livraison (110), et dans lequel le point central de livraison (110) transmet l'autre second message de provisionnement sans contact à l'autre équipement des locaux du client spécifique, dans lequel l'équipement des locaux du client spécifique et le système de gestion des opérations correspondent à un premier fournisseur de matériel d'équipement des locaux du client, et l'autre équipement des locaux du client spécifique et l'autre système de gestion des opérations correspondent à un second fournisseur de matériel d'équipement des locaux du client.

7. Réseau de télécommunications (100) comprenant un réseau d'accès à large bande (120), le réseau d'accès à large bande (120) comprenant au moins un point central de livraison (110) et le point central de livraison (110) comprenant ou ayant accès à une entité ou fonctionnalité d'orchestrateur d'accès (181), et une entité ou fonctionnalité de système de gestion d'éléments (182), dans lequel le point central de livraison (110), l'entité ou fonctionnalité d'orchestrateur d'accès (181) ou l'entité ou fonctionnalité de système de gestion d'éléments (182) comprend une entité ou fonctionnalité de détection de provisionnement sans contact,
dans lequel le réseau de télécommunications (100) comprend en outre une pluralité d'entités d'équipement des locaux du client (50, 50', 50'') desservant une pluralité d'utilisateurs finaux du réseau de télécommunications (100),
dans lequel le réseau d'accès à large bande (120) comprend en outre un système de gestion des opérations (105), le système de gestion des opérations (105) fournissant une fonctionnalité de provisionnement sans contact concernant au moins une entité d'équipement des locaux du client spécifique (50),
dans lequel le réseau d'accès à large bande (120) ou le réseau de télécommunications (100) comprenant un réseau d'accès à large bande (120) est configuré de telle sorte que :
- un premier message de provisionnement sans contact (220) qui est envoyé par ladite au moins une entité d'équipement des locaux du client spécifique (50) et destiné à être reçu par le système de gestion des opérations (105) est reçu par le point central de livraison (110), et
- le point central de livraison (110) transmet le premier message de provisionnement sans contact (220) au système de gestion des opérations (105), dans lequel le système de gestion des opérations (105) transmet un second message de provisionnement sans contact (221), le second message de provisionnement sans contact (221) étant adressé ou destiné à être reçu par l'équipement des locaux du client spécifique (50), dans lequel le second message de provisionnement sans contact (221) est reçu par le point central de livraison (110), et dans lequel le point central de livraison (110) transmet le second message de provisionnement sans contact (221) à l'équipement des locaux du client spécifique (50) et dans lequel l'entité ou la fonctionnalité de détection de provisionnement sans contact intercepte le premier message de provisionnement sans contact (220) destiné à être reçu par le système de gestion des opérations (105) et le second message de provisionnement sans contact (221) transmis par le système de gestion des opérations (105) à l'équipement des locaux du client spécifique (50).

8. Système d'exploitation d'un réseau d'accès à large bande (120) d'un réseau de télécommunications (100), le système comprenant le réseau de télécommunications (100) et le réseau d'accès à large bande (120), le réseau d'accès à large bande (120) comprenant au moins un point central de livraison (110) et le point central de livraison (110) comprenant ou ayant accès à une entité ou fonctionnalité d'orchestrateur d'accès (181), et une entité ou fonctionnalité de système de gestion d'éléments (182), dans lequel le point central de livraison (110), l'entité ou fonctionnalité d'orchestrateur d'accès (181) ou l'entité ou fonctionnalité de système de gestion d'éléments (182) comprend une entité ou fonctionnalité de détection de provisionnement sans contact,
dans lequel le réseau de télécommunications (100) comprend en outre une pluralité d'entités d'équipement des locaux du client (50, 50', 50'') desservant une pluralité d'utilisateurs finaux du réseau de télécommunications (100),
dans lequel le réseau d'accès à large bande (120) comprend en outre un système de gestion des opérations (105), le système de gestion des opérations (105) fournissant une fonctionnalité de provisionnement sans contact concernant au moins une entité d'équipement des locaux du client spécifique (50),
dans lequel le système est configuré de telle sorte que :
- un premier message de provisionnement sans contact (220) qui est envoyé par ladite au moins une entité d'équipement des locaux du client spécifique (50) et destiné à être reçu par le système de gestion des opérations (105) est reçu par le point central de livraison (110), et
- le point central de livraison (110) transmet le premier message de provisionnement sans contact (220) au système de gestion des opérations (105),
dans lequel le système de gestion des opérations (105) transmet un second message de provisionnement sans contact (221), le second message de provisionnement sans contact (221) étant adressé ou destiné à être reçu par l'équipement des locaux du client spécifique (50), dans lequel le second message de provisionnement sans contact (221) est reçu par le point central de livraison (110), et dans lequel le point central de livraison (110) transmet le second message de provisionnement sans contact (221) à l'équipement des locaux du client spécifique (50) et dans lequel l'entité ou la fonctionnalité de détection de provisionnement sans contact intercepte le premier message de provisionnement sans contact (220) destiné à être reçu par le système de gestion des opérations (105) et le second message de provisionnement sans contact (221) transmis par le système de gestion des opérations (105) à l'équipement des locaux du client spécifique (50).

9. Système selon la revendication 8 ou réseau de télécommunications (100) selon la revendication 7 comprenant un proxy de fonction d'interfonctionnement défini par logiciel (106) ou le point central de livraison (110) comprenant un proxy de fonction d'interfonctionnement défini par logiciel (106).

10. Programme comprenant un code de programme lisible par ordinateur qui, lorsqu'il est exécuté sur un ordinateur et/ou sur un noeud de réseau d'un réseau de télécommunications (100) et/ou sur un proxy de fonction d'interfonctionnement défini par logiciel (106) d'un point central de livraison (110), ou en partie sur le noeud de réseau d'un réseau de télécommunications (100) et/ou en partie sur le proxy de fonction d'interfonctionnement défini par logiciel (106) d'un point central de livraison (110), amène l'ordinateur et/ou le noeud de réseau du réseau de télécommunications (100) et/ou le proxy de fonction d'interfonctionnement défini par logiciel (106) du point central de livraison (110) à mettre en œuvre un procédé selon l'une des revendications 1 à 6.

11. Support lisible par ordinateur comprenant des instructions qui, lorsqu'elles sont exécutées par un ordinateur et/ou sur un noeud de réseau d'un réseau de télécommunications (100) et/ou sur un proxy de fonction d'interfonctionnement défini par logiciel (106) d'un point central de livraison (110), ou en partie sur le noeud de réseau d'un réseau de télécommunications (100) et/ou en partie sur le proxy de fonction d'interfonctionnement défini par logiciel (106) d'un point central de livraison (110), amène l'ordinateur et/ou le noeud de réseau du réseau de télécommunications (100) et/ou le proxy de fonction d'interfonctionnement défini par logiciel (106) du point central de livraison (110) à mettre en œuvre un procédé selon l'une des revendications 1 à 6.
